# EUROPÄISCHE PATENTANMELDUNG

(11) **EP 2 383 558 A1**
(43) Veröffentlichungstag der Anmeldung: **02.11.2011**
(21) Anmeldenummer: 11163383.0
(22) Anmeldetag: 21.04.2011
(51) Int. Cl.: G01L 3/10, G01L 5/22

(54) **Induktiver Winkelsensor**

(30) Priorität: 29.04.2010 DE 102010018724
(71) Anmelder: Hella KGaA Hueck & Co., 59552 Lippstadt (DE)
(72) Erfinder: Peters, Stefan, 59557, Lippstadt (DE)

(57) **Zusammenfassung**

Die Erfindung betrifft einen Induktiven Drehmomentsensor. Dieser soll eine Winkelbestimmung und eine Indexierung aufweisen und hierbei preiswert und kompakt herstellbar sein. Es wird vorgeschlagen, dass dem Hallsensor ein Flussleitblech zugeordnet ist, das in der Referenzposition den Fluss des Magneten zu dem Hallsensor leitet.

## Beschreibung

Die Erfindung betrifft einen induktiven Drehwinkelsensor gemäß dem Oberbegriff des Anspruchs 1.

Solche induktive Drehmomentsensoren werden z.B. in Kraftfahrzeugen eingesetzt, um Drehmomente wie Lenkmomente zu ermitteln. Dies wird zunehmend erforderlich, weil vermehrt elektromotorische Servoeinrichtungen zur Lenkhilfe eingesetzt werden. Diese benötigen das Lenkmoment zur Steuerung. Die Lenkmomente werden in einer Lenksäule durch einen Torsionsstab in Differenzwinkeln erkennbar und aus diesen berechnet. Hierfür werden die Verdrehungen an den Enden des Torsionsstabs mittels einer geeigneten induktiven Anordnung als Signale bestimmt und in Mittel zum Auswerten geleitet. Die Differenzwinkel, die durch die Torsion bewirkt werden, sind unabhängig von einer Stellung des Lenkrads zu bestimmen.

Weiterhin ist es z.B. für Fahrerassistenzsysteme wie ESP (elektronisches Stabilitätsprogramm für das Fahrverhalten des Fahrzeugs) wichtig, ebenfalls die Stellung (relative Winkelposition) des Lenkrads zu kennen. Hierfür wird ein Einschlag des Lenkrads (Winkel relativ zu einer Referenzposition) bestimmt. Damit auch Winkel größer oder kleiner als 360° bestimmt werden können, ist der Referenzposition eine Indexierung zugeordnet, die z.B. mittels eines Hallsensors und eines zugeordneten Magneten für jede vollständige Umdrehung des Lenkrads ein Signal erzeugt und so eine Anzahl der Umdrehungen bestimmt.

Aus der DE 10 2004 019 379 A1 ist ein Verfahren zum Ermitteln eines Differenzwinkels bekannt, bei dem zwei Drehwinkel bestimmt und hieraus ein Differenzwinkel berechnet wird. Beim Berechnen des Differenzwinkels werden unterschiedliche Übersetzungsverhältnisse zwischen den Drehungen zweier Komponenten berücksichtigt. Eine Vielzahl von Umdrehungen bleibt unberücksichtigt.

Die DE 102 25 013 A1 beschreibt einen induktiven Drehwinkelsensor mit mindestens einer Statorleiterplatte und mindestens zwei Rotoren. Zwischen der Statorleiterplatte und den Rotoren sind spezielle Gleitflächen ausgebildet. Hierdurch wird das Spiel zwischen der Statorleiterplatte und den Rotoren vermindert und so die Messgenauigkeit verbessert.

In der DE 10 2004 027 954 A1 ist ein induktiver Winkelmesser zur Bestimmung von Torsionswinkeln offenbart, der einen Stator und zwei Rotoren umfasst. Ein zweiter der Rotoren ist mit mindestens einem induktiven Koppelelement versehen. Die Rotoren sind beabstandet auf einem Torsionselement angeordnet.

Der mindestens eine Stator ist zusammen mit weiteren elektrischen und/oder elektronischen Bauteilen auf einer Leiterplatte angeordnet. Hierbei sind ist der Stator koaxial zu den Rotoren und somit zu der Lenksäule beziehungsweise zu dem Torsionsstab. Die Strukturen des Stators dürfen nicht durch die Bauteile gestört werden. Da der Magnet für die Indexierung aus räumlichen Gründen in kurzer radialer Distanz zu dem Torsionsstab angeordnet ist, ist der Hallsensor auf einer separaten zweiten Leiterplatte befestigt. Auf diese Weise kann der Hallsensor so angeordnet sein, dass der Magnet beim Drehen des Lenkrads über die Referenzposition auf den Hallsensor wirkt. Die zweite Leiterplatte verteuert den Drehmomentsensor. und erhöht dessen Bauraum.

Es ist die Aufgabe der Erfindung, einen Drehmomentsensor mit Winkelbestimmung und Indexierung zu schaffen, der preiswert und kompakt herstellbar ist.

Die Aufgabe ist durch die Merkmale des Anspruchs 1 gelöst. Dem Hallsensor ist ein Flussleitblech zugeordnet, das in der Referenzposition den Fluss des Magneten zu dem Hallsensor leitet. Hierdurch ist es möglich, den Hallsensor auf der selben Leiterplatte anzuordnen, auf der sich die anderen Bauteile sowie der Stator des Drehmomentsensors befinden. Der Hallsensor kann radial entfernt von dem Magneten außerhalb des Stators auf der Leiterplatte befestigt sein, der erforderliche Fluss des Magneten zur Beeinflussung des Hallsensors wird mittels des Flussleitblechs berührungslos übertragen. Das Flussleitblech ist einfach aus Blech zu stanzen und zu biegen sowie mit geringem Aufwand in den Drehmomentsensors zu integrieren. Eine zweite Leiterplatte nur für den Hallsensor ist nicht erforderlich, was die Fertigungskosten, z.B. Bereitstellen der Leiterplatte sowie separates Bestücken und Auftragen von Schutzlack, entsprechend reduziert. Insbesondere ist es möglich, den Drehmomentsensor modular so aufzubauen, dass er mit geringfügigen Änderungen an unterschiedliche Anforderungen z.B. für unterschiedliche Fahrzeugtypen und/oder technische Anforderungen anzupassen.

Anhand der beigefügten Zeichnungen wird die Erfindung nachfolgend näher erläutert. Dabei zeigt:
- Fig. 1: eine Explosionsdarstellung eines Drehmomentsensors mit Indexierung und
- Fig. 2: einen Schnitt durch den Drehmomentsensor.

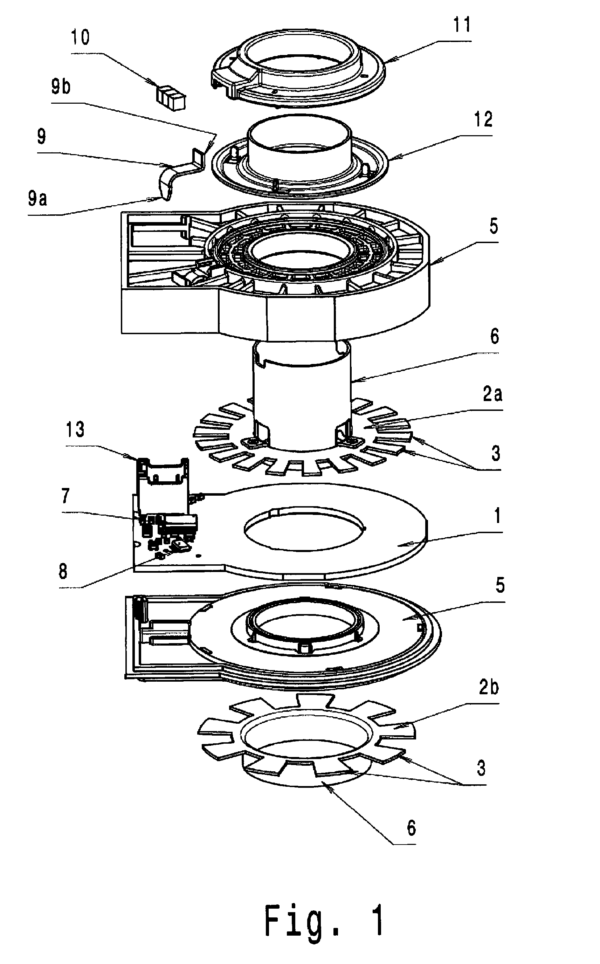

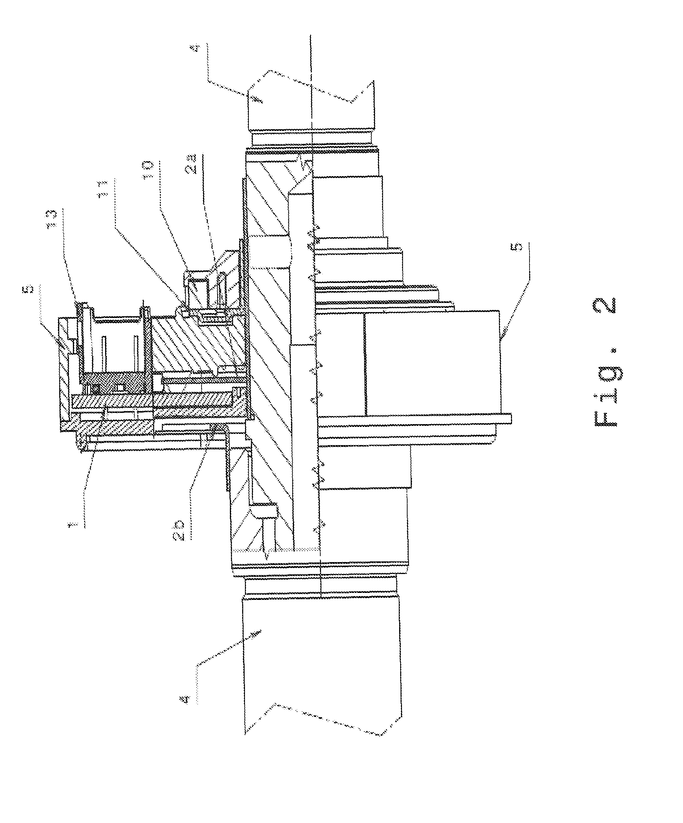

Wie aus den Figuren 1 und 2 ersichtlich umfasst ein induktiver Drehmomentsensor eine Leiterplatte 1 und zwei Rotorscheiben 2, wobei die Rotorscheiben 2 unterschiedliche Rotorstrukturen 3 mit Strukturgrößen von z.B. 20° beziehungsweise 40° aufweisen. Die Rotorscheiben 2 sind weitestgehend parallel und auf einer gemeinsamen Welle angeordnet, die hier durch einen Torsionsstab 4 gebildet ist. Dieser ist hier Teil einer Lenkwelle. Die Rotorscheiben 2 sind mit kurzem Abstand zu beiden Hauptflächen der Leiterplatte 1 verteilt. Die Leiterplatte 1 und eine erste der Rotorscheiben 2a sind von einem Gehäuse 5 weitgehend dicht umgeben. Eine zweite der Rotorscheiben 2b ist außen mit minimalem Abstand an dem Gehäuse 5 gelagert. Die Rotorscheiben 2, die Leiterplatte 1 und das Gehäuse 5 weisen jeweils eine Öffnung für den Torsionsstab 4 auf. Die Öffnungen sind entsprechend fluchtend.

Jede Rotorscheibe 2 ist mittels einer Trägerstruktur 6 drehfest an dem Torsionsstab 4 befestigt, wobei dieser zwischen den Rotorscheiben 2 ein Torsionselement aufweist. Die einstückige Trägerstruktur 6 umfasst einen rohrstückartigen Teil, dessen Innendurchmesser dem Durchmesser eines zugehörigen Teils des Torsionsstabs 4 zuzüglich einem vorbestimmten geringen Spiel entspricht und an dem die entsprechende Rotorscheibe 2a, 2b befestigt ist. Auf der Trägerstruktur 6 der ersten Rotorscheibe 2a, die in dem Gehäuse 5 angeordnet ist, ist von außen eine Scheibe 12 befestigt, die hier dicht an dem Gehäuse 5 anliegt. Auf diese Weise ist der Drehmomentsensor in sich gegen Verkippungen stabilisiert, wodurch diesbezügliche Messfehler minimiert werden.

Auf der Leiterplatte 1 sind vier Statoren ausgebildet, die in Verbindung mit den beiden Rotoren 2 vier Winkelsensoren bilden. Die Statoren sind zusammen mit erforderlichen Erregerstrukturen in bekannter Weise als Leiterbahnen auf den beiden Hauptflächen der Leiterplatte 1 aufgetragen und kontaktiert. Die Strukturen der Statoren sind mit den Strukturen der Rotorscheiben 2a, 2b abgestimmt.

Auf der Leiterplatte 1 ist radial außerhalb der Statoren ein Hallsensor 8 angeordnet. Dem Hallsensor 8 sind ein hier in etwa Z- förmig gebogenes Flussleitblech 9 und ein Permanentmagnet 10 zugeordnet. Der Permanentmagnet 10 ist mittels eines Trägerrings 11 drehfest so an dem Torsionsstab 4 befestigt, dass ein Magnetfluss radial nach außen gerichtet ist. Das Flussleitblech 9 ist so an dem Gehäuse 5 befestigt, dass sich ein erstes Ende 9a bei zusammengebautem Drehmomentsensor berührungslos unmittelbar über dem Hallsensor 8 befindet, während ein zweites Ende 9b unmittelbar an einem äußeren Drehkreis des Permanentmagneten 10 angeordnet ist. Hierbei ist ein Bereich des Flussleitblechs 9, der dem zweiten Ende 9b zugeordnet ist, parallel zu einer Achse des Torsionsstabs 4 ausgerichtet, um den Magnetfluss aus dem Permanentmagneten 10 besonders gut aufnehmen und weiterleiten zu können. Der Permanentmagnet 10 ist relativ zu dem Torsionsstab 4 so ausgerichtet, dass er in einer Referenzposition ist, wenn er sich direkt benachbart zu dem zweiten Ende 9b befindet.

Auf der Leiterplatte 1 ist weiterhin mindestens ein anwendungsspezifischer integrierter Schaltkreis (ASIC) 7 angeordnet. Jeder Schaltkreis 7 weist mindestens zwei Kanäle auf. Gegebenenfalls ist dem Schaltkreis 7 mindestens eine Auswerteeinheit nachgeschaltet. Der Schaltkreis 7 und gegebenenfalls die mindestens eine Auswerteeinheit bilden die Mittel zum Auswerten.

Zum elektrischen Anschluss an z.B. ein Steuergerät und gegebenenfalls an de Auswerteeinheit ist auf der Leiterplatte eine Steckbuchse 13 mit entsprechenden Kontaktstiften befestigt.

Im Betrieb werden die Rotoren 2 mittels des Torsionsstabs 4 gegenüber den Statoren verdreht. Hierdurch werden entsprechende Signale in die Kanäle des Schaltkreises 7 geleitet und ausgehend von einer festgelegten Nullstellung zu Drehwinkeln berechnet. Abhängig von einem über ein Lenkrad auf die Lenkstange ausgeübten Drehmoment tordiert der Torsionsstab 4 um einen bestimmten Winkel, so dass die beiden Rotoren 2 um entsprechend unterschiedliche Drehwinkel verdreht werden. Aus diesen unterschiedlichen Drehwinkeln wird ein Differenzwinkel berechnet, aus dem das auf die Lenkstange ausgeübte Drehmoment bestimmt wird.

Weiterhin ist mittels des Hallsensors 8, des Permanentmagneten 10 und des Flussleitblechs 9 eine Anzahl von ganzen Umdrehungen des Torsionsstabs 4 bestimmbar: Sobald der Torsionsstab 4 axial gedreht wird und der Permanentmagnet 10 die Referenzposition durchfährt, wird der Magnetfluss durch das Flussleitblech 9 zu dem Hallsensor 8 geleitet, der daraufhin ein Schaltsignal abgibt, das gezählt wird. Je nach Drehrichtung des Torsionsstabs 4 wird für jedes Schaltsignal die Zahl 1 addiert oder subtrahiert; aus der Summe in Verbindung mit dem Signal der Drehwinkel ist eine tatsächliche Lenkwinkelstellung bestimmbar.

### Bezugszeichenliste

- 1: Leiterplatte
- 2: Rotorscheibe
- 3: Rotorstruktur
- 4: Torsionsstab
- 5: Gehäuse
- 6: Trägerstruktur
- 7: Schaltung
- 8: Hallsensor
- 9: Flussleitblech
- 10: Dauermagnet
- 11: Trägerring
- 12: Scheibe
- 13: Steckbuchse

## Patentansprüche

1. Induktiver Drehwinkelsensor zur Bestimmung von Drehmoment und relativer Winkelstellung bezüglich einer Referenzposition, umfassend Mittel zum Erfassen von Winkeln und Differenzwinkeln,
Mittel zum Indexieren bei Durchfahren der Referenzposition mit einem Dauermagneten (10) sowie mit einem Hallsensor (8)
und Mittel zum Auswerten,
**dadurch gekennzeichnet, dass** dem Hallsensor (8) ein Flussleitblech (9) zugeordnet ist, das in der Referenzposition den Fluss des Dauermagneten (10) zu dem Hallsensor (8) leitet.

2. Induktiver Drehwinkelsensor nach Anspruch 1, **dadurch gekennzeichnet, dass** Statoren, elektrische und elektronische Bauteile sowie der Hallsensor (8) auf einer einzigen Leiterplatte (1) angeordnet sind
